# EUROPÄISCHE PATENTSCHRIFT

(11) **EP 1 590 714 B1**
(45) Veröffentlichungstag und Bekanntmachung des Hinweises auf die Patenterteilung: **17.10.2007**
(21) Anmeldenummer: 03775384.5
(22) Anmeldetag: 21.11.2003
(51) Int. Cl.: G05B 19/418

(54) **PROJEKTION VON SYNTHETISCHER INFORMATION**
PROJECTION OF SYNTHETIC INFORMATION
PROJECTION D'INFORMATION SYNTHETIQUE

(30) Priorität: 03.02.2003 EP 03002329
(43) Veröffentlichungstag der Anmeldung: 02.11.2005
(73) Patentinhaber: SIEMENS AKTIENGESELLSCHAFT, 80333 München (DE)
(72) Erfinder: SIMON, Markus, 91054 Buckenhof (DE)
(86) Internationale Anmeldenummer: PCT/EP2003/013092
(87) Internationale Veröffentlichungsnummer: WO 2004/070485

(56) Entgegenhaltungen:
- EP-A- 1 248 227
- WO-A-00/21024
- WO-A-01/54110
- DE-A- 10 022 577
- DE-A- 10 041 109
- FR-A- 2 729 236
- US-A- 6 084 557
- US-A1- 2002 061 217
- RACZYNSKI A ; REIMANN C ; GUSSMANN P ; MATYSCZOK C ; GROW A ; ROSENBACH W: "Augmented reality Siemens:The Workflow Designer Project & Augmented reality PDA" FIRST IEEE INTERNATIONAL AUGMENTED REALITY TOOLKIT WORKSHOP, 29. September 2002 (2002-09-29), XP002248709 DARMSTADT, GERMANY
- GEIGER C ET AL: "Mobile AR4ALL" AUGMENTED REALITY, 2001. PROCEEDINGS. IEEE AND ACM INTERNATIONAL SYMPOSIUM ON NEW YORK, NY, USA 29-30 OCT. 2001, LOS ALAMITOS, CA, USA,IEEE COMPUT. SOC, US, 29. Oktober 2001 (2001-10-29), Seiten 181-182, XP010568065 ISBN: 0-7695-1375-1

## Beschreibung

Die Erfindung betrifft ein Verfahren zur Projektion von synthetischer Information in eine reale Umgebung, sowie ein hierzu ausgebildetes mobiles Endgerät.

Die Projektion von synthetischer Information beziehungsweise Zusatzinformation führt zu einer Erweiterung der realen Welt. Dieses Vorgehen wird im Allgemeinen als "Augmented Reality" bezeichnet. Durch solche Verfahren können dem Benutzer hilfreiche Informationen mitgeteilt werden, die zur Erledigung einer bestimmten Aufgabe notwendig sind.

So kann beispielsweise bei einer Wartungsaufgabe der Monteur dadurch unterstützt werden, dass in das Kamerabild einer Wartungsanlage der nächste Anweisungsschritt an die entsprechende Position des Gerätes im Kamerabild künstlich eingeblendet wird. Ermöglicht wird dies durch die Projektion der synthetischen Information unter der genauen Kenntnis der Kameraposition in das dreidimensionale Modell der Wartungsanlage.

Solche Verfahren finden auch im medizinischen Bereich Anwendung zur unterstützenden Betrachtung von Röntgen- und Ultraschallbildern, beispielsweise während einer Operation.

In allen bekannten Anwendungen zum Thema "Augmented Reality" wird das Ergebnisbild, das in der Regel ein modifiziertes Kamerabild ist, auf einem Display dargestellt. Der Benutzer muss daher ständig selber die angezeigte Position innerhalb des modifizierten Bildes in der realen Umwelt oder Umgebung wiedererkennen. Wird in einer sehr komplexen Anlage beispielsweise am Pfeil an eine bestimmte Stelle im Kamerabild der Anlage eingezeichnet, so kann es unter Umständen sehr schwierig sein, die entsprechende, korrespondierende Position in der realen Anlage aufzufinden.

In der WO-A-0154110 wird eine projizierte Benutzer-Schnittstelle beschrieben. Zur Eingabe wird beispielsweise ein Finger auf der Schnittstelle über eine Kamera erkannt und hinsichtlich seiner Position zu Bedienflächen ausgewertet. Zur Positionserkennung weist die Schnittstelle Markierungen für das Kamerabild auf, wodurch die Bedienflächen in ihrer Lage im Kamerabild erkannt werden können.

Der Erfindung liegt die Aufgabe zugrunde, diese Nachteile zu vermeiden.

Diese Aufgabe wird erfindungsgemäß für ein Verfahren durch die im Patentanspruch 1 und für ein mobiles Endgerät durch die im Patentanspruch 3 angegebenen Merkmale gelöst.

Gemäß der Erfindung wird die synthetische Information direkt in die reale Umgebung projiziert, so dass sie an der entsprechenden Bildposition dargestellt wird. Hierdurch werden die genannten Nachteile bei der Verwendung eines Displays vermieden.

Der Grundgedanke der Erfindung ist die Projektion von synthetischer Information beziehungsweise Zusatzinformation in die reale Umgebung durch Verwendung einer Kamera im Verbund mit einer Projektionseinheit. Durch die Realisierung einer Rückkopplung zwischen dem Kamerabild und der Projektionseinheit erfolgt eine Korrektur der Projektionsposition.

Bei einer Weiterbildung der Erfindung erfolgt eine Realisierung einer Rückkopplung zwischen Kamerabild und Projektionseinheit zur Kompensation von Abbildungsfehlern.

Im Folgenden wird die Erfindung anhand eines in der Zeichnung dargestellten Ausführungsbeispieles näher beschrieben.

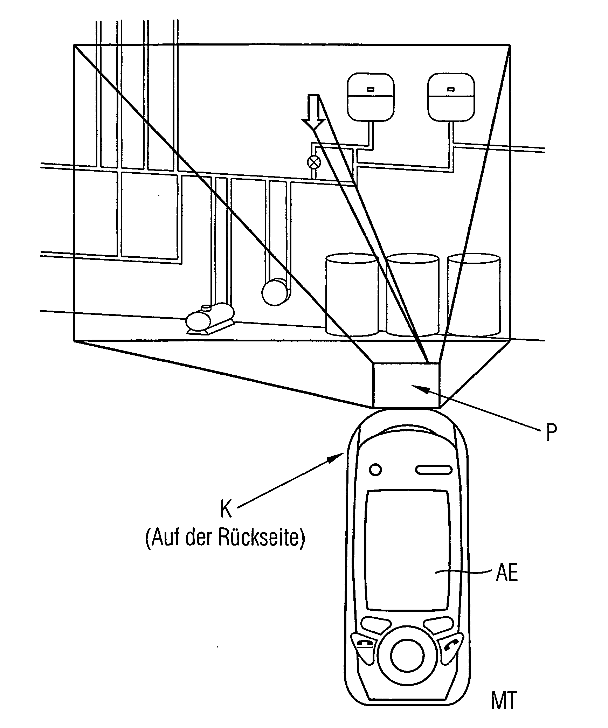

Zur Projektion von synthetischen Informationen in die reale Umgebung wird beispielsweise das in der Figur 1 dargestellt Mobiltelefon MT verwendet. Das Mobiltelefon MT weist hierzu ein Kameramodul K auf der Rückseite zur Aufzeichnung von Bildern aus der Umgebung auf, einen Prozessor zur Verarbeitung der Bildinformation, sowie eine Projektionseinheit P, die beispielsweise drehbar auf der Oberseite des Handys angeordnet ist. Auf der Frontseite des Mobiltelefons befindet sich eine Anzeigeeinrichtung AE.

Das Kamerabild wird mit Methoden der digitalen Bildverarbeitung ausgewertet. Hierunter sollen im Allgemeinen auch Verfahren der Mustererkennung verstanden werden, so dass beispielsweise abgebildete Gegenstände erkannt und identifiziert werden können, wodurch eine Zuordnung zu einem Modell möglich ist. So wird beispielweise durch Zugrundelegung der Informationen des dreidimensionalen Modells einer Anlage die Position berechnet, unter der beispielsweise ein Pfeil (in der Figur nicht näher bezeichnet)mit Hilfe der Projektionseinheit P in die reale Umgebung projiziert wird.

Das Projektionsergebnis wird anschließend im Kamerabild ausgewertet und durch eine Rückkopplung die Position des Pfeiles gegebenenfalls korrigiert. Wie schon ausgeführt, kann bei einer Weiterbildung der Erfindung auch die Abbildung selbst, beispielsweise hinsichtlich ihrer Größe, korrigiert werden.

Das erfindungsgemäße Verfahren benützt eine Projektionseinheit und eine Kamera beziehungsweise ein Kameramodul. Durch Auswertung des Kamerabildes und unter Zugrundelegung eines 3D-Objekt-Modells wird die Koordinate berechnet, an der die synthetische Information durch den Projektor P in die reale Umgebung projiziert wird. Der Benutzer sieht damit direkt an dem Objekt die zusätzliche synthetische Information. Die Information bestimmt dann die weitere Tätigkeit des Benutzers.

In dem Beispiel der Wartungsaufgabe kann somit ein Pfeil direkt auf das Teil projiziert werden, das beispielsweise ausgewechselt werden soll. Der Benutzer muss hierbei nicht auf ein Display beziehungsweise die Anzeigeeinrichtung AE schauen, und er muss das bezeichnete Teil auch nicht in der realen Umgebung erkennen. Der Umgang mit der Augmented Reality wird dadurch wesentlich einfachere und auch sicherer.

Darüber hinaus wird das Kamerabild ständig dazu verwendet, das Projektionsergebnis mit Methoden der digitalen Bildverarbeitung zu überwachen. Die Projektionsposition und bei einer Weiterbildung auch Abbildungsfehler durch die dreidimensionale Beschaffenheit des Objektes können erfasst und korrigiert werden. Abbildungsfehler entstehen beispielsweise bei der Abbildung eines Pfeiles auf einer geneigten Ebene. Durch die Korrektur wird eine mögliche Verzerrung beseitigt.

## Patentansprüche

1. Verfahren zur Projektion von synthetischer Information in eine reale Umgebung,
bei dem von der realen Umgebung ein Kamerabild generiert und mit Mitteln der Bildverarbeitung und / oder der Mustererkennung einem Modell zugeordnet wird, wobei das Modell auf Basis der realen Umgebung vorher bereitgestellt wird,
eine Position der Information unter Zugrundelegung des Modells berechnet und in die Umgebung projiziert wird, und
eine Rückkopplung über das Kamerabild zwischen der Position der Information im Model und deren projizierter Position in dem Kamerabild derart erfolgt, so dass die Information an einer durch das Modell vorbestimmten Position in der realen Umgebung positioniert wird.

2. Verfahren nach Anspruch 1,
bei dem mit den Mitteln der Bildverarbeitung eine Rückkopplung zwischen der Darstellung der Information und deren Projektion derart erfolgt, so dass Abbildungsfehler bei der Projektion korrigiert werden.

3. Mobiles Endgerät, insbesondere Kommunikationsendgerät,
mit einer Kamera und einer Projektionseinheit zur Projektion von synthetischer Information in eine reale Umgebung,
bei dem von der realen Umgebung ein Kamerabild generiert und mit Mitteln der Bildverarbeitung und / oder der Mustererkennung einem Modell zugeordnet ist, wobei das Modell auf Basis der realen Umgebung vorher bereitgestellt ist,
eine Position der Information unter Zugrundelegung des Modells berechnet und in die Umgebung projiziert ist und
eine Rückkopplung über das Kamerabild zwischen der Position der Information im Model und deren projizierter Position in dem Kamerabild derart erfolgt, so dass die Information an einer durch das Modell vorbestimmten Position in der realen Umgebung positioniert ist.

4. Endgerät nach Anspruch 3,
bei dem mit den Mitteln zur Bildverarbeitung eine Rückkopplung zwischen der Darstellung der Information und deren Projektion derart bewirkt ist, so dass Abbildungsfehler bei der Projektion korrigierbar sind.

## Claims

1. Method for projecting synthetic information into a real environment,
wherein a camera image of the real environment is generated and assigned to a model using means for image processing and/or pattern recognition, the model being provided beforehand on the basis of the real environment,
a position of the information is calculated using the model as a basis and is projected into the environment, and a feedback via the camera image between the position of the information in the model and the projected position thereof in the camera image is effected such that the information is positioned in the real environment at a position predetermined by the model.

2. Method according to claim 1,
wherein a feedback between the visualisation of the information and the projection thereof is effected using the means for image processing such that mapping errors in the projection are corrected.

3. Mobile terminal device, in particular a communication terminal, having a camera and a projection unit for projecting synthetic information into a real environment,
wherein a camera image of the real environment is generated and assigned to a model using means for image processing and/or pattern recognition, the model being provided beforehand on the basis of the real environment,
a position of the information is calculated using the model as a basis and is projected into the environment, and a feedback via the camera image between the position of the information in the model and the projected position thereof in the camera image is effected such that the information is positioned in the real environment at a position predetermined by the model.

4. Terminal device according to claim 3,
wherein a feedback between the visualisation of the information and the projection thereof is effected using the means for image processing such that mapping errors in the projection can be corrected.

## Revendications

1. Procédé de projection d'information synthétique dans un environnement réel,
dans lequel une image vidéo de l'environnement réel est produite et associée à un modèle avec des moyens de traitement d'images et/ou de reconnaissance de modèles, le modèle étant préparé auparavant sur la base de l'environnement réel,
dans lequel une position de l'information est calculée en se basant sur le modèle et est projetée dans l'environnement, et
dans lequel il s'effectue une rétroaction via l'image vidéo entre la position de l'information dans le modèle et sa position projetée dans l'image vidéo de telle sorte que l'information est positionnée dans l'environnement réel à une position prédéterminée par le modèle.

2. Procédé selon la revendication 1,
dans lequel, avec les moyens de traitement d'images, une rétroaction entre la représentation de l'information et sa projection s'effectue de telle sorte que des erreurs de reproduction lors de la projection sont corrigées.

3. Terminal mobile, notamment terminal de communication, avec une caméra et avec une unité de projection pour la projection d'information synthétique dans un environnement réel,
dans lequel une image vidéo de l'environnement réel est produite et associée à un modèle avec des moyens de traitement d'images et/ou de reconnaissance de modèles, le modèle étant préparé auparavant sur la base de l'environnement réel,
dans lequel une position de l'information est calculée en se basant sur le modèle et est projetée dans l'environnement, et
dans lequel il s'effectue une rétroaction via l'image vidéo entre la position de l'information dans le modèle et sa position projetée dans l'image vidéo de telle sorte que l'information est positionnée dans l'environnement réel à une position prédéterminée par le modèle.

4. Terminal selon la revendication 3,
dans lequel, avec les moyens de traitement d'images, une rétroaction entre la représentation de l'information et sa projection est provoquée de telle sorte que des erreurs de reproduction lors de la projection peuvent être corrigées.
